(19) Europäisches Patentamt
European Patent Office
Office européen des brevets

(11) Numéro de publication: **0 001 373**
**B1**

# (12) FASCICULE DE BREVET EUROPEEN

(45) Date de publication du fascicule du brevet: **20.10.82**

(51) Int. Cl.$^3$: **B 41 J 3/04**, C 01 B 31/36 //C23C 11/10

(21) Numéro de dépôt: **78430009.7**

(22) Date de dépôt: **20.07.78**

## (54) Procédé de dépôt de films de carbure de silicium lisses, et sans trous d'épingle sur un substrat de silicium.

(30) Priorité: **08.09.77 US 831561**

(43) Date de publication de la demande:
**04.04.79 Bulletin 79/7**

(45) Mention de la délivrance du brevet:
**20.10.82 Bulletin 82/42**

(84) Etats contractants désignés:
**DE FR GB**

(56) Documents cités:
**FR - A - 1 427 316**
**GB - A - 1 092 582**
**GB - A - 1 115 951**
**US - A - 4 028 149**

**IBM TECHNICAL DISCLOSURE BULLETIN, vol. 19, 1977, bo. 9, février, C. CHIOU et al "Ink jet nozzles", page 3569.**
**IBM TECHNICAL DISCLOSURE BULLETIN, vol. 18, 1976, no. 12, mai, M. R. POPONIAK et al. "Thick wear resistant coatings for silicon devices", page 4008.**

(73) Titulaire: **International Business Machines Corporation**
**Armonk, N.Y. 10504 (US)**

(72) Inventeur: **Balog, Moshe**
**Givat Beit Hakerel 2/23**
**Jerusalem (IL)**
Inventeur: **Berkenblit, Melvin**
**2232 Ridge Street Yorktown Heights**
**New York 10598 (US)**
Inventeur: **Chan, See-Ark**
**Amberlands 15W Croton-on-Hudson**
**New York 10520 (US)**
Inventeur: **Reisman, Arnold**
**2294 Van Cortlandt Circle Yorktown Heights**
**New York 10598 (US)**

(74) Mandataire: **Klein, Daniel**
**COMPAGNIE IBM FRANCE Département de Propriété Industrielle**
**F-06610 La Gaude (FR)**

**EP 0 001 373 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

(56) Documents cités:

IBM TECHNICAL DISCLOSURE BULLETIN vol. 18, 1975, juillet, J. ABOAF et al. "In situ formation of ink jet nozzle protective coating", pages 613—614.

JOURNAL OF CRISTAL GROWTH, vol. 22, 1974, mai. E. MODRAK et al. "Etching of alpha SiC crystals in hydrogen and argon flow", pages 181—187.

JAPANESE JOURNAL OF APPLIED PHYSICS, vol. 5, 1966, no. 10, octobre, H. NAKASHIMA et al. "Epitaxial growth of Sic film on silicon substrate and its crystal structure", pages 874—878.

# Procédé de dépôt de films de carbure de silicium lisses, et sans trous d'épingle sur un substrat de silicium

Domaine technique

La présente invention concerne un procédé et un appareil pour former des films minces de SiC, dépourvus de trous d'épingle et lisses, sur un substrat de silicium (Si). Le silicium joue un rôle important dans la fabrication de buses d'éjection d'encre intervenant dans la technologie d'impression par jets d'encre (US—A 3 921 916 et 4 007 464). Cependant, par suite des tendances à la corrosion et à l'érosion des encres électrostatiques et magnétiques respectivement, la durée de vie des buses de Si pose un problème du point de vue fiabilité.

Etat de la technique antérieure

Le dioxyde de silicium, $SiO_2$, a été employé comme revêtement protecteur mais ne peut à lui seul apporter une solution finale au problème. D'autres solutions consistent à utiliser d'autres types de revêtements minces tels que des revêtements de $Si_3N_4$, $Al_2O_3$, ou à base de métaux, d'alliages, et autres. Un des principaux problèmes rencontrés dans le dépôt des films minces mentionnés ci-dessus est la prédisposition de ces films aux imperfections. En outre, l'adhérence et certains manques d'affinité dans la composition des films sont également d'autres problèmes à prendre en considération.

L'article intitulé "In Situ Formation of Ink Jet Nozzle Protective Coatings" de J. Aboaf et al, IBM Technical Disclosure Bulletin, Vol. 18, No. 2, juillet 1975 décrit un procédé de passivation des films de silicium. Il suggère que la structure en forme de buse au silicium soit oxydée et ensuite soumise à un dépôt chimique réalisé à partir d'une vapeur d'un matériau organique tel que du méthane, de l'éthane, du propane, ou autres éléments semblables. Le processus ainsi décrit dans cet article s'est avéré être inadéquat et les films n'offrent pas les caractéristiques nécessaires à la passivation des buses. En d'autres termes, on n'obtient pas les films minces avec la densité élevée, dépourvus de trous d'épingle, fortement adhésifs, lisses, sans contrainte interne et chimiquement inertes, souhaités.

Exposé de l'invention

La présente invention concerne donc un procédé pour former des films minces chimique de carbure de silicium (SiC) sur des substrats de silicium (Si) comprenant les étapes suivantes:

a) placement des substrats de Si dans un suscepteur (14) de tantale revêtu de carbure de tantale, le suscepteur étant disposé de manière flottante dans un réacteur à haute fréquence (10),
b) chauffage des substrats de Si à une température comprise entre 1200 et 1350°C dans une atmosphère ambiante d'helium pendant un temps suffisant pour supprimer l'oxyde de silicium des surfaces des substrats,
c) refroidissement des substrats à une température d'environ 900°C,
d) envoi d'un mélange gazeux, d'un composé organique choisi dans le groupe comprenant le methane, l'éthane et le propane d'hélium préchauffés, dans le réacteur tout en maintenant la température à environ 900°C pendant un temps suffisant pour craquer ledit composé organique et assurer le dépôt du film de carbone sur les substrats,
e) arrêt du courant gazeux dudit composé organique et chauffage desdits substrats dans une atmosphère pure de He à une température comprise entre environ 1200 et 1350°C pendant un temps suffisant pour atteindre l'épaisseur désirée de SiC sur lesdits substrats, et
f) lent refroidissement desdits substrats jusqu'à atteindre la température ambiante.

Le suscepteur qui est dépourvu de tout agent de contamination est fabriqué à partir de portions de tantale recuites qui sont mécaniquement polies et nettoyées dans une série de solutions chimiques. Juste avant la préparation des films de carbure de silicium, le suscepteur est assemblé dans un réacteur à haute fréquence qui est chauffé pour supprimer les oxydes de ce suscepteur qui est ensuite traité au méthane pour obtenir la formation de carbure de tantale sur ses parois. C'est dans ce type de suscepteur qu'est placé le substrat de silicium juste avant qu'il soit revêtu du carbure de silicium.

Il est connu du document GB—A—1 092 582 un procédé pour former du carbure de silicium à partir de carbone obtenu par la décomposition pyrolitique d'hydrocarbures gazeux (tels que le propane) et de silicium provenant du support chauffé. Les substrats étant placés dans un suscepteur, qui est disposé de manière flottante dans un réacteur HF. La formation du revêtement de SiC s'effectue à une température de 1300°C.

Brève description des figures

La figure 1 représente schématiquement le suscepteur et son réacteur comme l'achèvement d'une série d'étapes de traitement.

La figure 2 représente une vue en coupe du substrat de silicium disposé dans le suscepteur, lui-même placé dans le réacteur.

La figure 3 est une vue éclatée du suscepteur contenant le substrat de silicium.

Description détaillée des modes préférés de réalisation

Le matériau de départ est un substrat de silicium qui peut avoir été muni de buses d'éjection d'encre telles que celles décrites dans le brevet US—A 4 007 464, ou de toutes autres

buses semblables. Le revêtement se fait conformément à la réaction bien connue $Si+CH_4=SiC+2H_2$. Cette réaction a été étudiée par W. G. Spitzer et al dans un article intitulé: "Infrared Properties of Cubic Silicon Carbide Films", Physical Review 113 (1959) 133. A cette occasion, ils ont élaborés des données sur les films de SiC en vue de mesures de réflexion et de transmission aux rayons infrarouges. H. Nakashima et al, dans un article intitulé "Epitaxial Growth of Sic Film on Silicon Substrate and its Crystal Structure", Japanese Journal of Applied Physics 5, 874 (1966) mesurent les couches de croissance en fonction des températures approximatives et des pressions partielles de $CH_4$. P. Chaudhari et al dans l'ouvrage publié sous le titre: "$\beta$-Silicon Carbide Films", Journal of the Electrochem. Soc. 116, 1440 (1969), obtiennent des films de SiC allant de la structure monocristalline orientée à des structures quasi-amorphes. Les films de SiC d'orientation $\beta$ sont soumis à une croissance dans un réacteur à haute fréquence horizontal qui utilise de l'hydrogène ou de l'argon comme gaz porteur. J. Graul et al dans l'ouvrage publié sous le titre: Growth Mechanism of Polycrystalline $\beta$SiC Layers on Silicon Substrate", Applied Physics Letters 21, 67, (1972) ont fourni les données relatives à la formation de films de SiC comme résultat de la réaction chimique du silicium avec le méthane et ont recherché le mécanisme de base au moyen d'une technique de traçage au carbone 14.

Aucune des références données ci-dessus ne mentionne donc le problème que tente de résoudre la présente invention. Le but de la présente invention est en effet de fournir un mince film de passivation, c'est-à-dire, qu'elle se propose de préparer des films de SiC de densité élevée, dépourvus de trous d'épingle, lisses et sans contrainte; la présente invention se propose également de fournir un suscepteur et un réacteur qui soient dépourvus de tous agents de contamination.

Dans la présente invention, des substrats de Si vont réagir avec du méthane à des températures comprises entre 1200 et 1350° dans un réacteur du type à chauffage haute fréquence, horizontal, soit directement, soit en deux étapes, dans ce cas avec réaction initiale du méthane à 900°C.

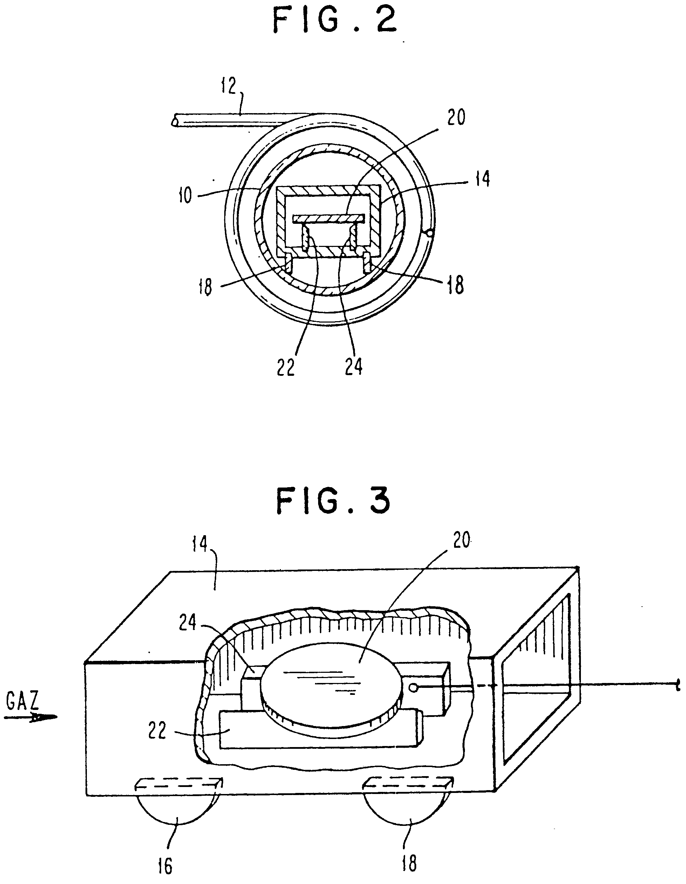

Le réacteur est représenté sur la figure 1 en 10 et est chauffé par des bobines à haute fréquence 12. Des substrats de Si, non représentés, sont placés dans le suscepteur 14. Le suscepteur 14 est placé dans le réacteur 10 de manière à ne toucher aucune des surfaces du suscepteur. Il repose sur quatre supports en saphir dont deux sont représentés en 16 et 18, et il est "flottant". Suivant la figure 2, le substrat 20 est placé dans le suscepteur 14 sur deux supports de saphir 22 et 24 dont les bords sont en lame de couteau au point de contact avec le substrat 20.

La figure 3 représente un suscepteur partiellement éclaté montrant l'emplacement du substrat 20, sur les bords en lame de couteau des membres supports 22 et 24 situés dans le suscepteur 14. Il est à noter que le suscepteur 14 repose sur les éléments supports 16 et 18 de sorte que le contact avec le réacteur 10 est réduit au minimum (figure 2), c'est pour cela qu'il est dit "flottant".

Le réacteur 10 peut être fabriqué dans du quartz (silice très pure) et constitue un réacteur classique bien connu dans l'art antérieur. Le suscepteur 14 est fabriqué dans du tantale recuit qui est mécaniquement poli et ensuite nettoyé dans une série de solutions, par exemple, du trichloroéthylène, de l'acétone, de l'eau désionisée, un décapant de White, de l'eau désionisée, de l'alcool, et ensuite séché. Les portions du suscepteur en tantale sont traitées et assemblées avant d'être placées dans le réacteur 10 pour être chauffées lentement pendant environ 1 heure à une température avoisinant 1300°C. Le suscepteur est ensuite chauffé pendant 10 minutes dans de l'hydrogène pour enlever les oxydes de la surface. On utilise de l'hydrogène très pur, éventuellement après passage sur du platine (Pt) (figure 1). Le méthane est alors introduit dans le réacteur 10 et le suscepteur de tantale vient en réaction avec le carbone pour former du carbure de tantale (TaC). La réaction se fait en trois heures environ à une température de l'ordre de 1300°C.

Le choix des matériaux constituant le suscepteur et le support devient extrêmement difficile lorsque les températures de la réaction augmentent, et particulièrement lorsqu'elles atteignent 1200°C. Ces matériaux peuvent être source de contaminations à ces températures élevées. Il s'est avéré que des suscepteurs en graphite ou des sucepteurs en graphite revêtus de SiC engendrent des agents de contamination (à des degrés divers), qui réagissent avec les substrats de Si. On a étudié le cas où serait utilisé comme matériau de revêtement du graphite, des matériaux qui ne seraient pas du SiC. Par exemple, les revêtements de silicium et de tungstène montrent des fissures, tandis que les oxydes réfractaires sont attaqués par l'hydrogène aux températures élevées. Les métaux réfractaires et leurs carbures et siliciures sont éventuellement acceptables pour former des suscepteurs. La plupart d'entre eux peuvent facilement être associés à des systèmes de chauffage par induction. On a utilisé quelques uns d'entre eux, par exemple le tungstène et le carbure de tungstène, la tantale et le tantale revêtu de siliciure de tantale. L'utilisation du tantale a été étudiée dans les ouvrages suivants de A. Todkill et al, Materials Research Bull. No. 4, pages S293—S302 (1969) "The Properties of Some SiC Electroluminescent Diodes", de S. Mindgawa et al, Jap. Journal of Appl. Phys. No. 10, pages 1680—90 (1971) "Epitaxial Growth of $\alpha$-SiC

from the Vapor Phase", et de J. M. Harris et al, J. Electrochem. Soc. No. 118, pages 335—338 (1971) "Growth Characteristics of Alpha-Silicon Carbide I. Chemical vapor Deposition".

Le tantale revêtu de $TaSi_2$ a été utilisé avec succès pour réduire la teneur en agents de contamination; cependant, il a une courte durée de vie par suite des difficultés rencontrées lors de l'élimination des carbones accumulés. En effet l'élimination du carbone à partir des parties de Ta revêtues de $TaSi_2$ nécessite le grattage ou le broyage de la couche de carbone. Cette opération détruit alors l'intégrité du revêtement et il faut alors faire appel à un autre appareil pour revêtir les portions de Ta. En revanche, dans le cas de la présente invention, où Ta est revêtu de TaC, le carbone est éliminé de façon semblable mais il peut être redéposé in situ. Il s'est avéré que l'utilisation de tantale revêtu de carbure de tantale, s'est révélée avantageuse aux fins de la présente invention.

Outre le choix du matériau, un second facteur à considérer est la géométrie du suscepteur. Le suscepteur, comme le montrent les dessins, est une boîte rectangulaire à extrémités ouvertes faite dans des plaques de tantale. Les plaques supérieure et inférieure ont une épaisseur d'environ 0,625cm les parois latérales ont une épaisseur d'environ 0,315cm. Il est très important que le suscepteur soit isolé des parois du réacteur en quartz fondu, et qu'il ne comporte pas de supports en quartz, afin d'éviter toute réaction entre le tantale et le quartz fondu. Le suscepteur est maintenu par des éléments de support en saphir. L'utilisation d'un suscepteur en forme de coffret "flottant" réduit la contamination, fournit une température plus uniforme au substrat et tous les côtés du substrat sont revêtus durant une seule réaction. La température du réacteur est régulée par un thermocouple.

Une fois accomplies les étapes essentielles de préparation du suscepteur 14, données ci-dessus, les substrats de silicium sont nettoyés dans une solution d'acide fluorhydrique (à 10% ou tamponnée) rinçés à l'eau désionisée et ensuite séchés. Les substrats 20 sont ensuite placés dans le suscepteur 14 sur les bords en lame de couteau des éléments support 22 et 24. Avant l'introduction du méthane, le (les) substrat(s) 20 est (sont) chauffé(s) à 1250°C dans un courant d'hélium préchauffé, ce pour éliminer l'oxyde d'origine présent, conformément à la réaction suivante:

$$\text{à } 1250°C\ SiO_2 \rightarrow SiO\uparrow + 1/2O_2$$

La réaction de formation du SiC est alors réalisée soit en une seule étape, soit en deux étapes. Dans le premier cas la température du substrat de Si est réglée entre 1200 et 1350°C, et dans le deuxième cas il y a un passage intermédiaire à 900°C. Un mélange de gaz (préchauffé) contenant du méthane et de l'hélium est alors admis dans le réacteur 10.

Le préchauffage des gaz mélangés est également nécessaire pour rendre minimal le refroidissement du substrat par les gaz pénétrant dans le suscepteur et assurer l'uniformité de la température du substrat. Il est nécessaire de maintenir une température de substrat uniforme afin d'obtenir des films ayant une épaisseur uniforme. Ceci est accompli en préchauffant le gaz introduit à une température inférieure à celle où le méthane craque. Cette opération se fait à environ 600°C, voire à une température supérieure, mais généralement inférieure à 800°C.

Avant son admission dans le réacteur 10, de l'hélium (He) très pur est encore purifié in situ par un passage dans de l'azote liquide puis successivement sur du niobium, du titane et du silicium, chauffés. Il passe ensuite dans la chambre de mélange 26, comme le montre la figure 1, où il est utilisé pour diluer davantage le mélange de $CH_4$—He à 0,6%. Le courant de gaz dépend du diamètre du réacteur ainsi que de la dimension du suscepteur. Par exemple, lorsque le diamètre du réacteur est de 39mm et que la taille du suscepteur est 15×3,75×1,90cm, le débit est d'environ 2,5 litres/minute. Or, lorsque le diamètre du réacteur est de 69mm et que la taille du suscepteur est de 15×6,25×4cm, le débit est de 9,3 litres/minute. Il est évident pour l'homme de l'art que les débits peuvent être augmentés ou diminués suivant que la taille du réacteur est plus ou moins grande. Le mélange de gaz pénétre ensuite dans le dispositif de chauffage préalable 28 où il est chauffé dans un four à résistance à une température de l'ordre de 600°C. Le mélange de gaz chauffé peut ensuite pénétrer dans le réacteur 10 et de là dans le suscepteur 14 où il réagit avec le substrat de silicium 20. Le temps attribué à la réaction du mélange de gaz avec le substrat de silicium 20 peut varier d'environ 10 à 720 minutes suivant l'épaisseur requise.

Dans un premier mode de réalisation préféré, les substrats de silicium sont revêtus de SiC grâce au procédé à deux étapes.

Une fois les substrats placés dans le suscepteur (qui a été traité de la façon décrite ci-dessus), l'atmosphère ambiante de He entourant les substrats est portée à une température comprise entre 1200 et 1350°C. La température préférée est de 1250°C. Le courant d'He a une vitesse linéaire d'environ 4cm/seconde et un débit d'environ 8,1 litres/minute. Les substrats sont chauffés pendant environ 10mn, afin de permettre la suppression de l'oxyde d'origine.

Ce procédé de suppression de l'oxyde d'origine recouvrant la surface de silicium est préféré à celui impliquant un phénomène de réduction à des températures élevées dans une atmosphère ambiante d'hydrogène, étant donné que la qualité de la surface est susceptible de se détériorer lorsqu'il est fait appel à des techniques de reduction par hydrogène. En outre, le $SiO_2$ réduit va laisser sur la surface, des résidus

de silicium qui ne sont pas du tout souhaitables. La température est alors abaissée à environ 900°C (ce qui prend environ 20 minutes). Du méthane ($CH_4$) est ensuite admis avec l'hélium dans le réacteur et dans le suscepteur pendant environ 30 minutes, temps durant lequel $CH_4$ est craqué pour former une couche de carbone (C) sur le substrat de Si. Comme cela a été mentionné plus haut, le débit de méthane et d'hélium va être déterminé par la taille du réacteur et du suscepteur. La concentration de $CH_4$ peut varier d'environ $0{,}8 \times 10^{-3}$ à environ $2{,}4 \times 10^{-3}$ moles/litre de gaz total. De préférence, la concentration de $CH_4$ est environ de $2{,}4 \times 10^{-3}$ moles/litre. Une fois le temps de dépôt écoulé (environ 30 minutes à 900°C), on coupe l'arrivée de méthane. Le réacteur est ensuite chauffé à une température comprise entre 1200°C et 1350°C dans une atmosphère ambiante de He pur. La température préférée est de 1250°C. La couche de carbone réagit avec le silicium à cette température pendant 60 minutes dans une atmosphère d'hélium. Le réacteur est ensuite lentement refroidi jusqu'à atteindre la température ambiante (environ 2 heures). Dans ces conditions, le taux de croissance des films est d'environ 20 Å/minute. Les films obtenus finalement sont dépourvus de trous d'épingle.

Les films de SiC ainsi obtenus sont lisses, très denses, adhérents et sans trous d'épingle. Dans les deux cas, la réaction est auto-limitatrice en ce sens que le processus de réaction va se poursuivre aussi longtemps que la surface de silicium va être en contact avec les gaz de carbone ou de méthane. Ce procédé est tout à fait différent du procédé de dépôt de film où il n'y a aucune réaction entre le dépôt de film et le substrat sous-jacent.

**Revendications**

1. Procédé de formation de films de carbure de silicium (SiC) sur des substrats de silicium (Si) comprenant les étapes suivantes:

a) placement des substrats de Si dans un suscepteur (14) de tantale revêtu de carbure de tantale, le suscepteur étant disposé de manière flottante dans un réacteur à haute fréquence (10),
b) chauffage des substrats de Si à une température comprise entre 1200 et 1350°C dans une atmosphère ambiante d'helium pendant un temps suffisant pour supprimer l'oxyde de silicium des surfaces des substrats,
c) refroidissement des substrats à une température d'environ 900°C,
d) envoi d'un mélange gazeux, d'un composé organique choisi dans le groupe comprenant le methane, l'éthane et le propane et d'hélium préchauffés, dans le réacteur tout en maintenant la température à environ 900°C pendant un temps suffisant pour craquer ledit composé organique et assurer le dépôt du film de carbone sur les substrats,
e) arrêt du courant gazeux dudit composé organique et chauffage desdits substrats dans une atmosphère pure de He à une température comprise entre environ 1200 et 1350°C pendant un temps suffisant pour atteindre l'épaisseur désirée de SiC sur lesdits substrats, et
f) lent refroidissement desdits substrats jusqu'à atteindre la température ambiante.

2. Procédé selon la revendication 1 caractérisé en ce que la température choisie pour l'étape b) et l'étape e) est 1250°C.

3. Procédé selon la revendication 1 ou 2 caractérisé en ce que la durée du refroidissement de l'étape f) est deux heures.

4. Procédé selon la revendication 1, 2 ou 3 caractérisé en ce que le composé organique choisi est le méthane.

5. Procédé selon la revendication 4 caractérisé en ce que le méthane est présent dans le mélange suivant une gamme de concentration allant d'environ $0{,}8 \times 10^{-3}$ moles/litre à $2{,}4 \times 10^{-3}$ moles/litre.

6. Procédé selon la revendication 5 caractérisé en ce que la concentration choisie est $1{,}6 \times 10^{-3}$moles/litre.

**Patentansprüche**

1. Verfahren zur Bildung von dünnen Siliciumcarbidschichten (SiC) auf Siliciumsubstraten (Si), gekennzeichnet durch folgende Verfahrensschritte:

a. Anordnen der Siliciumsubstrate in einem mit Tantalcarbid beschichteten Tantalsuszeptor (14), der berührungsfrei in einem Hochfrequenzreaktor (10) angeordnet ist,
b. Ausreichend langes Erhitzes der Siliciumsubstrate auf eine zwischen ungefähr 1200 und 1350°C liegende Temperatur, um das Siliciumoxid von den Substratoberflächen zu entfernen,
c. Abkühlen der Substrate auf eine Temperatur von ungefähr 900°C,
d. Einführen einer vorgewärmten Gasmischung aus einer organischen, aus der Gruppe der gesättigten Kohlenwasserstoffe gewählten Verbindung und aus Helium in den Reaktor, wobei die Temperatur ausreichend lange auf ungefähr 900°C gehalten wird, um die organische Verbindung zu kracken und das Niederschlagen der SiC-Schicht auf den Substraten zu gewährleisten,
e. Unterbrechen des Gasflusses der organischen Verbindung und ausreichend langes Erhitzen der Substrate in reiner Heliumatmosphäre auf eine zwischen ungefähr 1200 und 1350°C liegende Temperatur, um die gewünschte Dicke des SiC auf den Substraten zu erhalten, und

f. Langsames Abkühlen der Substrate auf Raumtemperatur.

2. Verfahren nach Anspruch 1, dadurch gekennzeichnet, daß die für die Verfahrensschritte b) und e) gewählte Temperatur 1250°C beträgt.

3. Verfahren nach Anspruch 1 oder 2, dadurch gekennzeichnet, daß die Dauer des Abkühlens in Verfahrensschritt f) zwei Stunden beträgt.

4. Verfahren nach Anspruch 1, 2 oder 3, dadurch gekennzeichnet, daß als organische Verbindung Methan gewählt wird.

5. Verfahren nach Anspruch 4, dadurch gekennzeichnet, daß das Methan in dem Gemisch in einer Konzentration zwischen $0{,}8 \times 10^{-3}$ Mol/Liter und $2{,}4 \times 10^{-3}$ Mol/Liter vorhanden ist.

6. Verfahren nach Anspruch 5, dadurch gekennzeichnet, daß eine Konzentration von $1{,}6 \times 10^{-3}$ Mol/Liter gewählt wird.

## Claims

1. A method for forming silicon carbide films (SiC) on silicon (Si) substrates including the following steps:

a) placing the silicon substrates in a tantalum carbide-coated tantalum susceptor (14) in such a way that it is disposed floating in an HF reactor (10),
b) heating the silicon substrates to a temperature ranging from approximately 1200 to approximately 1350°C during a time sufficient to remove the silicon oxide from the surfaces of the substrates,
c) cooling the substrates to a temperature of approximately 900°C,
d) introducing a gas mixture consisting of a preheated organic compound chosen from the group of saturated hydrocarbons and pre-heated helium into the reactor while maintaining the temperature at approximately 900°C for a time sufficient to crack said organic compound and to ensure depositing the SiC film on the substrates,
e) interrupting the gas flow of said organic compound and heating said substrates in a pure He atmosphere to a temperature ranging from approximately 1200 to 1350°C for a time sufficient to reach the desired SiC thickness on said substrates, and
f) slowly cooling said substrates to the ambient temperature.

2. A method according to claim 1, characterized in that the temperature chosen for step b) and step e) is 1250°C.

3. A method according to claim 1 or 2, characterized in that the cooling time in step f) is two hours.

4. A method according to claim 1, 2, or 3, characterized in that the organic compound chosen is methane.

5. A method according to claim 4, characterized in that said methane is present in the mixture in a concentration ranging from about $0.8 \times 10^{-3}$ moles/liter to $2.4 \times 10^{-3}$ moles/liter.

6. A method according to claim 5, characterized in that the chosen concentration is $1.6 \times 10^{-3}$ moles/liter.

FIG. 1

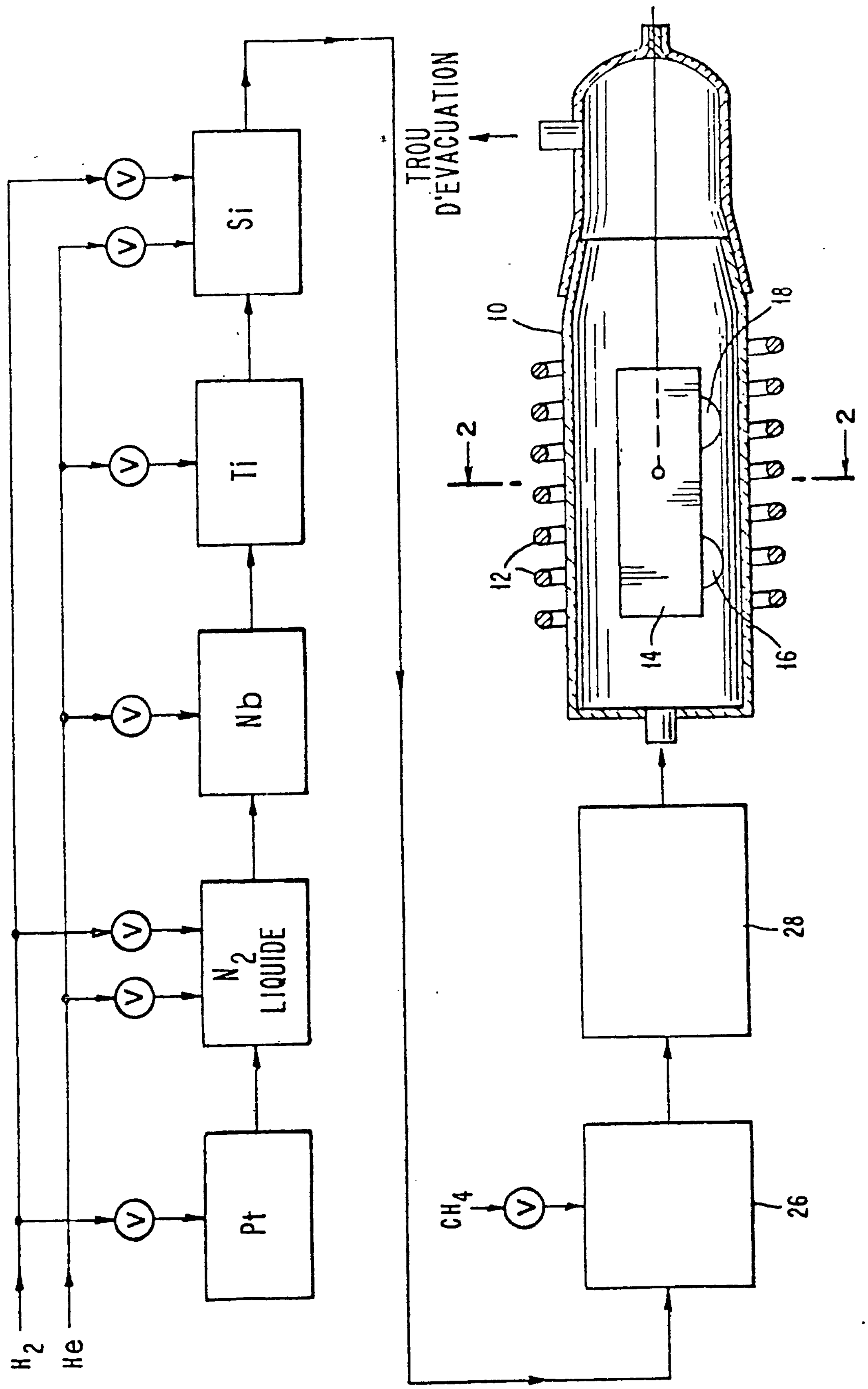
H2
He
Pt
N2 LIQUIDE
Nb
Ti
Si
V
TROU D'EVACUATION
CH4
10
12
14
16
18
2
26
28

FIG. 2

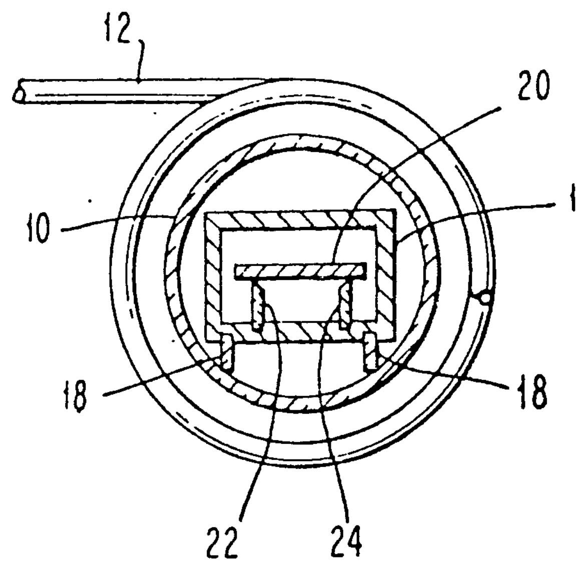


FIG. 3